# EUROPEAN PATENT SPECIFICATION

(11) **EP 1 760 210 B1**
(45) Date of publication and mention of the grant of the patent: **28.04.2010**
(21) Application number: 06018159.1
(22) Date of filing: 31.08.2006
(51) Int. Cl.: E04B 1/86, E01F 8/00, B29C 53/06

(54) **Sound deadening construction for making panels or walls**
Schalldämmende Vorrichtung zum Herstellen von Panele oder Wände
Dispositif d'atténuation phonique pour la réalisation de panneaux ou murs

(30) Priority: 31.08.2005 IT MI20051620
(43) Date of publication of application: 07.03.2007
(73) Proprietor: Donati, Francesco, 24060 Cenate Sopra (Bergamo) (IT); Donati, Giuseppe, 24060 Cenate Sopra (Bergamo) (IT)
(72) Inventor: Donati, Francesco, 24060 Cenate Sopra (Bergamo) (IT); Donati, Giuseppe, 24060 Cenate Sopra (Bergamo) (IT)
(74) Representative: Cicogna, Franco

(56) References cited:
- EP-A- 0 843 045
- EP-A- 1 148 175
- WO-A-96/32605
- CH-A5- 672 932
- DE-A1- 4 118 183
- FR-A- 2 629 387
- US-A- 1 711 471
- US-A- 3 804 196
- US-A- 4 042 061
- US-A1- 2002 124 508

## Description

### BACKGROUND OF THE INVENTION

The present invention relates to a sound deadening construction, which has been specifically designed for making panels or walls.

US 3 804 196 A discloses a sound deadening construction according to the preamble of claim 1.

As is known, for making sound deadening panels, walls and other elements, materials having sound deadening characteristics are conventionally used.

However, the above mentioned prior sound deadening materials are affected by several drawbacks, such as their high cost, difficult to be processed, a high negative environmental impact, and yet other problems related to the aesthetic aspect of the material, which must be necessarily painted or coated, depending on its provided use.

### SUMMARY OF THE INVENTION

Accordingly, the aim of the present invention is to provide such a sound deadening construction for making panels, walls and other elements having sound deadening characteristics, which can be made starting from an inexpensive starting material which must not be necessarily provided, per se, with sound deadening features.

Within the scope of the above mentioned aim, a main object of the invention is to provide such a sound deadening construction which can be made at a lowest making cost and in a very simple manner.

According to one aspect of the present invention, the above mentioned aim and objects, as well as yet other objects, which will become more apparent hereinafter, are achieved by a sound deadening construction according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

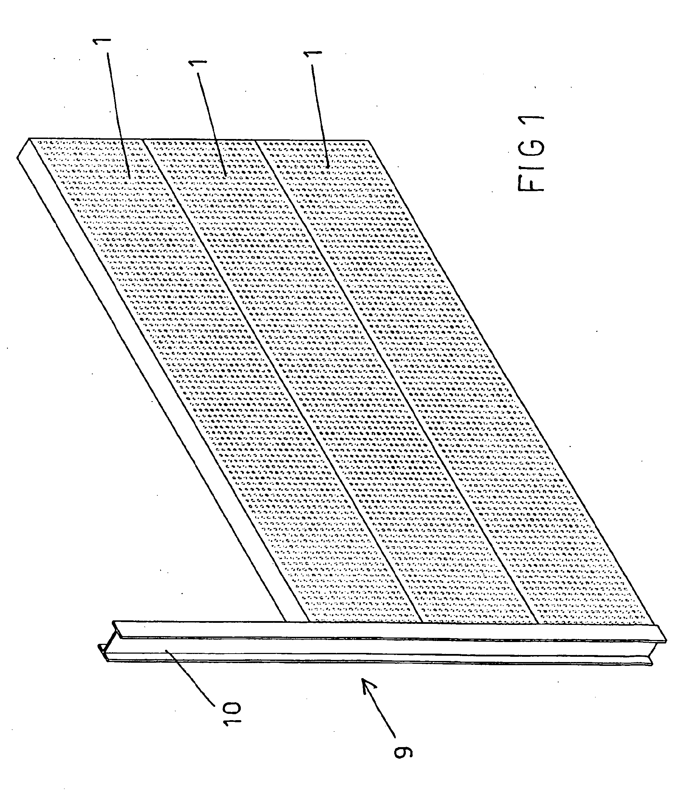

Figure 1 is a perspective view of a portion of a panel made by the sound deadening construction according to the invention;

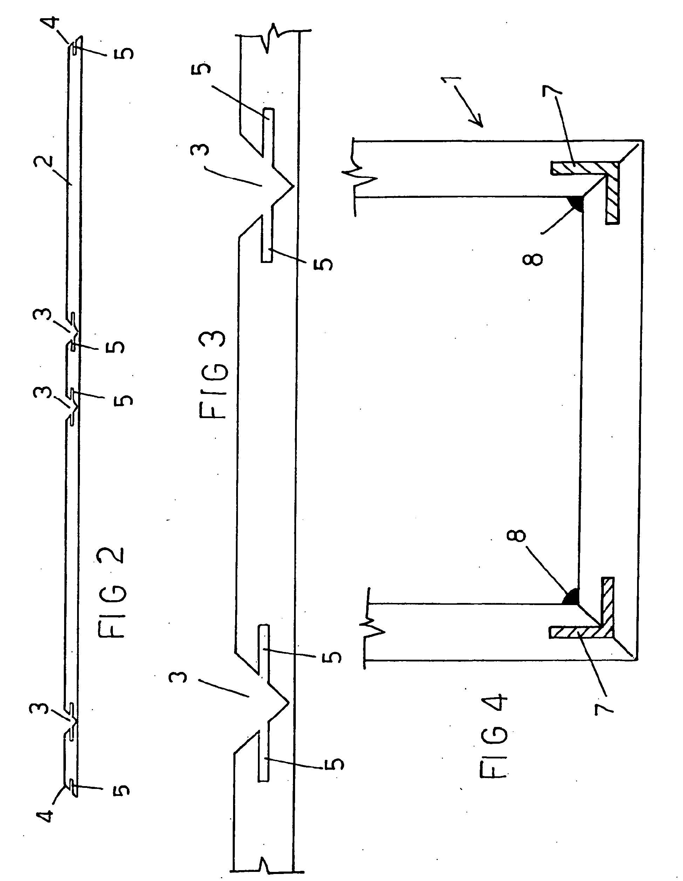

Figure 2 is an elevation view showing a plate for making the subject sound deadening construction;
Figure 3 is a view of that same sound deadening plate, on an enlarged scale;
Figure 4 is a further front elevation view of the sound deadening construction according to the invention;

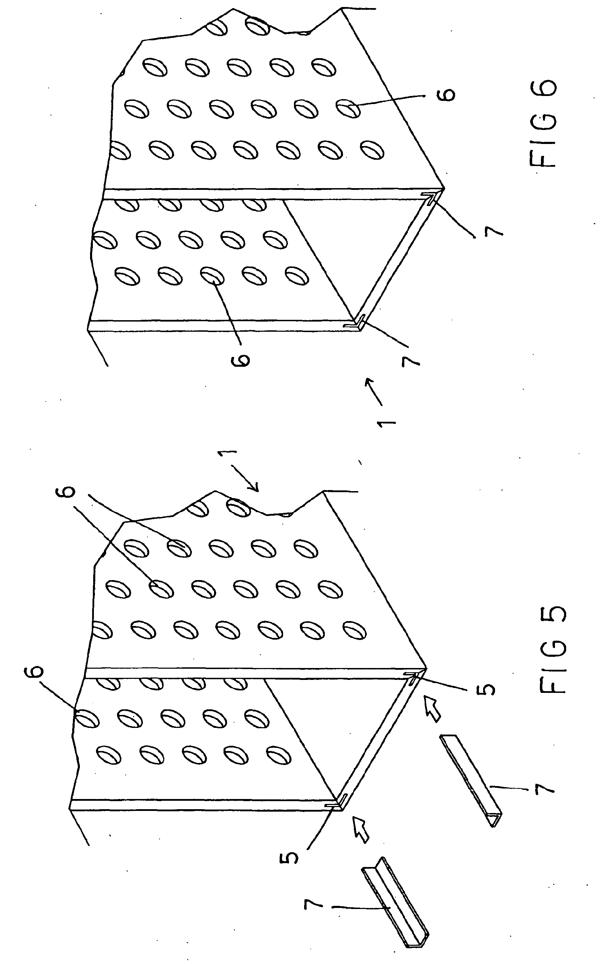

Figure 5 is a partial perspective view showing an operating step for engaging reinforcement inserts in the sound deadening construction according to the invention;
Figure 6 is a further partial perspective view of the sound deadening construction according to the invention; and

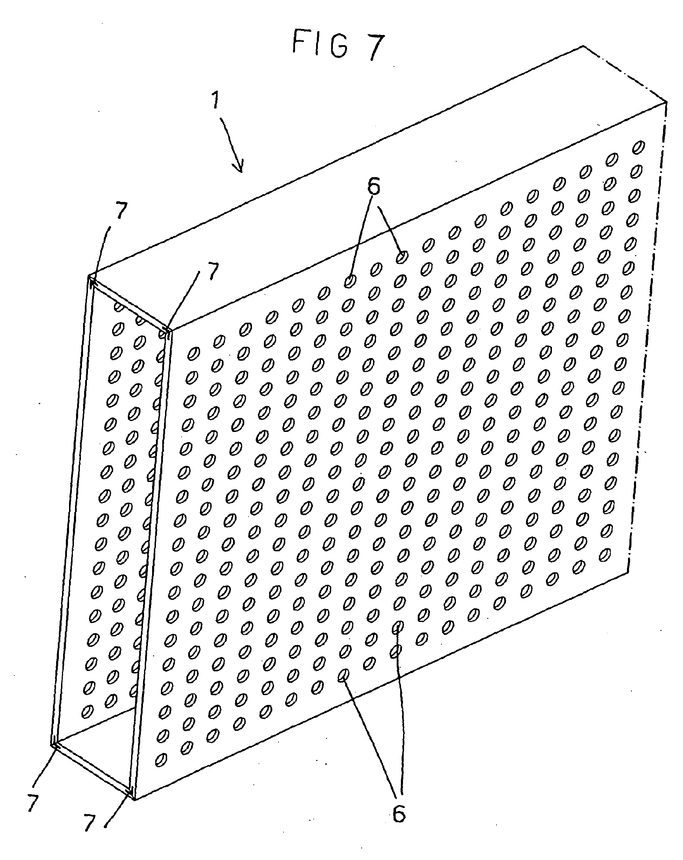

Figure 7 is yet another perspective view of that same sound deadening construction.

### DESCRIPTION OF THE PREFERRED EMBODIMENT

With reference to the number references of the above mentioned figures, the sound deadening construction according to the invention, which has been generally indicated by the reference number 1, is made starting from a plate 2 which can be obtained by an extruding machine, or by the so-called "folding" system.

Preferably, the plate 2 is provided with a plurality of longitudinal V-shape notches 3 and, at its outer corners, with a further plurality of diagonal notches 4.

At said notches, moreover, are provided milled regions 5 which are substantially parallel to the major faces of the plate 2.

In particular, said plate is perforated by making, at least at its major sides, a plurality of holes 6, the diameter, distance and number of which can be varied depending on the sound deadening characteristics to be obtained, and based on the material used for making the plate.

Then, said plate 2 is folded or bent at said notches and joined along the outer corners or sides thereof corresponding to said notches 4, to provide a parallelepipedal box-like body.

At the milled regions 5, moreover, are optionally further engaged reinforcement or stiffening elements 7, which can be made either of a metal or a non metal material.

Furthermore, at its inner corners, it is possible to provide seamings or weldments 8, thereby providing a very strength construction.

The thus made box-like body can be assembled to form a panel or wall 9, on side beams 10, for example made of a glass-resin material or an extruded polymeric material.

The material forming the plate 2 is PVC.

With a box-like body made of PVC, and by using uprights or beams 10 also made of a resin or plastics material, it is not necessary to connect to ground of the earth the construction, with great practical advantages, for example in railroad applications.

The sound deadening features of the above disclosed construction are assured by the provision of the holes 6 on both sides of the box-like body, which holes provide a sort of labyrinth for the acoustic waves.

Thus, said sound waves will dissipate their energy, since they would be repeatedly reflected inside the box-like body.

It has been found that the invention fully achieves the intended aim and objects.

In fact, the invention provides a sound deadening construction which can be made without using sound deadening materials or fibers.

## Claims

1. A sound deadening construction, for making panels or walls, said sound deadening construction comprising a parallelepipedal box-like body having two both perforated mayor front and rear faces, and side beams, whereby said box-like body is mounted on side beams, so as to provide a panel or a wall, **characterized in that** said box-like body is made from an extruded PVC plate having a plurality of throughgoing holes and which is so bent as to form said parallelepipedal box-like body, the throughgoing holes of said faces defining a labyrinth path for the acoustic waves which are repeatedly reflected in the empty inner space of said parallelepipedal box-like body thereby dissipating their acoustic ennergy, and **in that** the side beams are plastic material side beams.

2. A sound deadening construction, according to claim 1, **characterized in that** said plate is made by a plastics material extruding machine or a plastics material folding system.

3. A sound deadening construction, according to claim 1 or 2, **characterized in that** said plate comprises a plurality of longitudinal V-shape notches and, on its outer corners, a plurality of diagonal notches.

4. A sound deadening construction, according to claim 3, **characterized in that** said construction comprises, at said notches, milled regions substantially parallel to the major faces of the plate.

5. A sound deadening construction, according to claim 3, **characterized in that** said plate is bent at said notches and is joined along the outer faces or sides corresponding to said notches, thereby providing said parallelepipedal box-like body.

6. A sound deadening construction, according to claim 4, **characterized in that** said construction comprises a plurality of stiffening or reinforcement elements at said milled regions.

7. A sound deadening construction, according to claim 1, **characterized in that** said construction comprises weldments at its inner sides.

8. A sound deadening construction, according to claim 1, **characterized in that** said plastics material side beams are made of a glass-resin material.

9. A sound deadening construction, according to claim 1, **characterized in that** said plastics material side beams are made of an extruded polymeric material.

10. A sound deadening construction, according to claim 6, **characterized in that** said reinforcement elements are made either of a metal or of a non metal material.

## Patentansprüche

1. Schalldämmender Aufbau zum Herstellen von Panelen oder Wänden, wobei der schalldämmende Aufbau einen quaderförmigen schachtelartigen Körper mit einer vorderen und einer hinteren Hauptfläche, die beide perforiert sind, und Seitenträger umfasst, wobei der schachtelartige Körper an Seitenträgern angebracht ist, um ein Panel oder eine Wand bereitzustellen, **dadurch gekennzeichnet, dass** der schachtelartige Körper aus einer extrudierten PVC-Platte hergestellt ist, die mehrere durchgehende Löcher aufweist und so gebogen ist, dass sie den quaderförmigen Körper bildet, wobei die durchgehenden Löcher der Flächen einen Labyrinthweg für die Schallwellen, die im leeren Innenraum des quaderförmigen schachtelartigen Körpers wiederholt reflektiert werden und **dadurch** ihre Schallenergie abbauen, definieren; und dass die Seitenträger Seitenträger aus einem Kunststoffmaterial sind.

2. Schalldämmender Aufbau nach Anspruch 1, **dadurch gekennzeichnet, dass** die Platte durch eine kunststoffmaterialextrudierende Maschine oder ein kunststoffmaterialfaltendes System hergestellt ist.

3. Schalldämmender Aufbau nach Anspruch 1 oder 2, **dadurch gekennzeichnet, dass** die Platte mehrere längsgerichtete V-förmige Kerben und, an ihren äußeren Ecken, mehrere diagonale Kerben umfasst.

4. Schalldämmender Aufbau nach Anspruch 3, **dadurch gekennzeichnet, dass** der Aufbau an den Kerben gefräste Bereiche umfasst, die im Wesentlichen parallel zu den Hauptflächen der Platte verlaufen.

5. Schalldämmender Aufbau nach Anspruch 3, **dadurch gekennzeichnet, dass** die Platte an den Kerben gebogen ist und entlang der Außenflächen oder -seiten den Kerben entsprechend verbunden ist, wodurch der quaderförmige schachtelartige Körper bereitgestellt wird.

6. Schalldämmender Aufbau nach Anspruch 4, **dadurch gekennzeichnet, dass** der Aufbau an den gefrästen Bereichen mehrere Versteifungs- oder Verstärkungselemente umfasst.

7. Schalldämmender Aufbau nach Anspruch 1, **dadurch gekennzeichnet, dass** der Aufbau an seinen Innenseiten Schweißteile umfasst.

8. Schalldämmender Aufbau nach Anspruch 1, **dadurch gekennzeichnet, dass** die Kunststoffmaterial-Seitenträger aus einem Glas-Harz-Material hergestellt sind.

9. Schalldämmender Aufbau nach Anspruch 1, **dadurch gekennzeichnet, dass** die Kunststoffmaterial-Seitenträger aus einem extrudierten Polymermaterial hergestellt sind.

10. Schalldämmender Aufbau nach Anspruch 6, **dadurch gekennzeichnet, dass** die Verstärkungselemente entweder aus einem Metall oder aus einem nichtmetallischen Material hergestellt sind.

## Revendications

1. Dispositif d'atténuation phonique, pour la réalisation de panneaux ou murs, ledit dispositif d'atténuation phonique comprenant un corps parallélépipédique semblable à une boîte présentant deux faces principales perforées avant et arrière et des montants latéraux, grâce à quoi ledit corps semblable à une boîte est monté sur des montants latéraux, de façon à réaliser un panneau ou un mur, **caractérisé en ce que** ledit corps semblable à une boîte est composé d'une plaque en PVC extrudé présentant une pluralité de trous traversant et qui est pliée de façon à former ledit corps parallélépipédique semblable à une boîte, les trous traversant desdites faces définissant un trajet à chicanes pour les ondes acoustiques qui sont réfléchies de manière répétée dans l'espace intérieur vide dudit corps parallélépipédique semblable à une boîte en dissipant ainsi leur énergie acoustique, et **en ce que** les montants latéraux sont des montants latéraux en matière plastique.

2. Dispositif d'atténuation phonique, selon la revendication 1, **caractérisé en ce que** ladite plaque est fabriquée par une machine extrudeuse de matière plastique ou un système de pliage de matière plastique.

3. Dispositif d'atténuation phonique, selon la revendication 1 ou 2, **caractérisé en ce que** ladite plaque comprend une pluralité d'encoches longitudinales en forme de V et, sur ses coins extérieurs, une pluralité d'encoches diagonales.

4. Dispositif d'atténuation phonique, selon la revendication 3, **caractérisé en ce que** ledit dispositif comprend, au niveau desdites encoches, des régions présentant des entailles sensiblement parallèles aux faces principales de la plaque.

5. Dispositif d'atténuation phonique, selon la revendication 3, **caractérisé en ce que** ladite plaque est incurvée au niveau desdites encoches et est assemblée, le long des faces ou des côtés extérieurs(res) correspondant auxdites encoches, en réalisant ainsi ledit corps parallélépipédique semblable à une boîte.

6. Dispositif d'atténuation phonique, selon la revendication 4, **caractérisé en ce que** ledit dispositif comprend une pluralité d'éléments raidisseurs ou de renforcement au niveau desdites régions présentant des entailles.

7. Dispositif d'atténuation phonique, selon la revendication 1, **caractérisé en ce que** ledit dispositif comprend des soudures au niveau de ses côtés intérieurs.

8. Dispositif d'atténuation phonique, selon la revendication 1, **caractérisé en ce que** lesdits montants latéraux en matière plastique sont composés d'un matériau de verre résine.

9. Dispositif d'atténuation phonique, selon la revendication 1, **caractérisé en ce que** lesdits montants latéraux en matière plastique sont composés d'un matériau polymère extrudé.

10. Dispositif d'atténuation phonique, selon la revendication 6, **caractérisé en ce que** lesdits éléments de renforcement sont composés soit d'un matériau métallique, soit d'un matériau non métallique.
